# EUROPEAN PATENT APPLICATION

(11) **EP 4 778 836 A1**
(43) Date of publication of application: **22.07.2026**
(21) Application number: 25215521.3
(22) Date of filing: 13.11.2025
(51) Int. Cl.: B64D 45/00, G08G 5/32, B64F 5/60

(54) **SYSTEM AND METHOD FOR ADJUSTING ENGINE POWERSETTING FOR MINIMUM EQUIPMENT LIST DISPATCH**

(30) Priority: 17.01.2025 US 202519027947
(71) Applicant: The Boeing Company, Arlington, VA 22202 (US)
(72) Inventor: BUDZINSKI, Anthony James, III, Arlington, 22202 (US)
(74) Representative: Boult Wade Tennant LLP

(57) **Abstract**

An aircraft includes one or more processors configured to receive input identifying a first equipment item as inoperative. The one or more processors are configured to select, based on the input identifying the first equipment item as inoperative, an adjustment factor to be applied during engine performance calculations for a particular planned flight of the aircraft. The one or more processors are configured to determine, based on the adjustment factor and ambient condition data associated with the aircraft, a set of engine performance planning metrics for the particular planned flight. The one or more processors are configured to determine, based on the set of engine performance planning metrics, a weight penalty, a fuel penalty, or both, for the particular planned flight.

## Description

### FIELD OF THE DISCLOSURE

The present disclosure is generally related to aircraft engine control systems, and more particularly to systems and methods for automatically adjusting engine power settings during dispatch with inoperative equipment items.

### BACKGROUND

In aircraft operations, aircraft are frequently dispatched with certain equipment items being inoperative. When operating with inoperative equipment items, the impact on engine performance must be accounted for through adjustments to engine power settings and performance calculations.

Traditional approaches for managing inoperative equipment items related to engine performance impacts rely on manually applied factors. These factors are used to modify nominal aircraft performance calculations to account for the effects of inoperative components on engine thrust output, fuel flow, and exhaust gas temperature. The manual application of these factors introduces operational complexity and can result in overly conservative performance penalties being applied across different flight phases.

Current methods require flight crews to reference multiple operational documents to determine appropriate performance adjustments. These adjustments often vary based on flight phase, environmental conditions, and the inoperative component. The challenge is further complicated by the potential for multiple components to be inoperative, each with distinct impacts on engine performance. Additionally, existing approaches may require mandatory power setting reductions or operational procedures that add complexity to flight operations.

An improved approach for managing such inoperative equipment items would enhance aircraft performance, increase flight crew effectiveness, or both.

### SUMMARY

According to one example of the present disclosure, an aircraft includes one or more processors configured to receive input identifying a first equipment item as inoperative. The one or more processors are configured to select, based on the input identifying the first equipment item as inoperative, an adjustment factor to be applied during engine performance calculations for a particular planned flight of the aircraft. The one or more processors are configured to determine, based on the adjustment factor and ambient condition data associated with the aircraft, a set of engine performance planning metrics for the particular planned flight. The one or more processors are configured to determine, based on the set of engine performance planning metrics, a weight penalty, a fuel penalty, or both, for the particular planned flight.

According to another example of the present disclosure, an aircraft includes one or more processors configured to receive input identifying a first equipment item as inoperative. The one or more processors are configured to, based on the input, select an adjustment factor associated with an inoperative status of the first equipment item. The one or more processors are configured to calculate a set of engine performance planning metrics for a planned flight based on the adjustment factor and based on ambient condition data associated with a flight path of the planned flight. The one or more processors are configured to determine, based on the set of engine performance planning metrics, a weight penalty, a fuel penalty, or both, for the planned flight.

According to another example of the present disclosure, a method includes receiving input identifying a first equipment item as inoperative. The method also includes based on the input, selecting an adjustment factor associated with an inoperative status of the first equipment item. The method also includes calculating a set of engine performance planning metrics for a planned flight based on the adjustment factor and based on ambient condition data associated with a flight path of the planned flight. The method also includes determining, based on the set of engine performance planning metrics, a weight penalty, a fuel penalty, or both, for the planned flight.

The features, functions, and advantages described herein can be achieved independently in various examples or may be combined in yet other examples, further details of which can be found with reference to the following description and drawings.

### BRIEF DESCRIPTION OF THE DRAWINGS

FIG. 1 is a diagram that illustrates a system for generating adjusted engine power settings and performance calculations for aircraft operating with inoperative equipment items.
FIG. 2 is a flow diagram illustrating an example of operations performed by a device, as in FIG. 1, to aid in generating adjusted engine power settings and performance calculations for aircraft operating with inoperative equipment items.
FIG. 3 is a flow diagram illustrating an example of operations performed by a device, as in FIG. 1, to aid in generating adjusted engine power settings and performance calculations for aircraft operating with inoperative equipment items.
FIG. 4 is a flow diagram illustrating an example of operations performed by the device, as in FIG. 1, to aid in generating adjusted engine power settings and performance calculations for aircraft operating with inoperative equipment items.
FIG. 5 is a flow chart of a method of generating adjusted engine power settings and performance calculations for aircraft operating with inoperative equipment items.
FIG. 6 is a flowchart illustrating an example of a life cycle of an aircraft that includes a device of FIG. 1
FIG. 7 is a block diagram illustrating an aircraft that includes a device of FIG. 1.
FIG. 8 is a diagram of electronic components of a system for generating adjusted engine power settings and performance calculations for aircraft operating with inoperative components.

### DETAILED DESCRIPTION

As aircraft systems become increasingly sophisticated, inefficiencies related to aircraft performance and flight crew effectiveness due to traditional approaches for managing engine performance impacts associated with inoperative equipment items have become more pronounced. Such inefficiencies can be reduced or minimized by integrated approaches to manage engine performance impacts associated with inoperative equipment items. Such approaches should be capable of automatically calculating appropriate power setting adjustments while accounting for variations in flight conditions and aircraft configuration throughout the flight.

Examples disclosed herein present systems and methods for adjusting engine power settings when aircraft are dispatched with inoperative equipment items. This system enables more efficient aircraft operation by calculating and implementing appropriate engine performance adjustments, rather than relying on manual calculations and conservative estimates.

The system works by integrating Minimum Equipment List (MEL)-related calculations across multiple aircraft computers and systems. When a flight crew identifies an inoperative equipment item, they can select it either through switches in the cockpit or through the aircraft's display screens. The system then automatically calculates how this inoperative equipment item affects engine performance. For example, it determines how much to adjust the engine's power setting to account for changes in engine temperature and fuel usage. These calculations consider various factors like altitude, temperature, and other environmental conditions that affect engine performance.

To handle different flight phases efficiently, the system adjusts its calculations throughout the flight. During takeoff, it calculates one set of adjustments to ensure the aircraft has appropriate performance for departure. During climb and cruise, it automatically updates these calculations to match the changing flight conditions. This provides appropriate engine performance settings without requiring the flight crew to make manual adjustments or consult multiple reference documents.

The system can also handle situations where multiple equipment items are inoperative at the same time. Instead of requiring separate calculations for each equipment item, it combines the effects and determines the appropriate overall adjustment. This helps ensure accurate performance calculations even in complex situations where traditional manual methods might be particularly challenging.

By using the techniques and systems described herein, aircraft can achieve more precise and efficient engine operations. The automated system can calculate performance adjustments in seconds rather than requiring time-consuming manual calculations. The adjustments are more precise because the system continuously updates its calculations based on actual flight conditions, unlike manual methods that often use simplified assumptions. The system also reduces operational complexity by automatically implementing these adjustments rather than requiring flight crews to follow multiple manual procedures. These improvements enhance aircraft performance and reduce flight crew workload while ensuring safe operation throughout the flight.

The figures and the following description illustrate specific examples. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific examples described below, but by the claims.

Particular examples are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter.

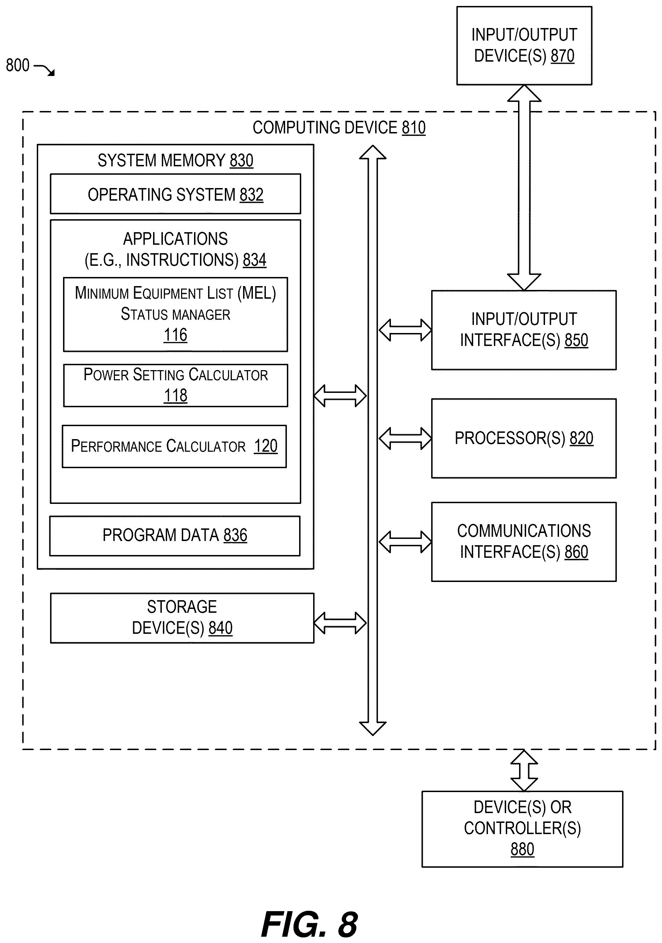

As used herein, various terminology is used for the purpose of describing particular examples only and is not intended to be limiting. For example, the singular forms "a," "an," and "the" are intended to include the plural forms as well, unless the context clearly indicates otherwise. Further, some features described herein are singular in some examples and plural in other examples. To illustrate, FIG. 8 depicts a computing device 810 including one or more processors ("processor(s)" 820 in FIG. 8), which indicates that in some examples the computing device 810 includes a single processor 820 and in other examples the computing device 810 includes multiple processors 820. For ease of reference herein, such features are generally introduced as "one or more" features and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example and should not be construed as limiting or as indicating a preference or a preferred example. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some examples, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

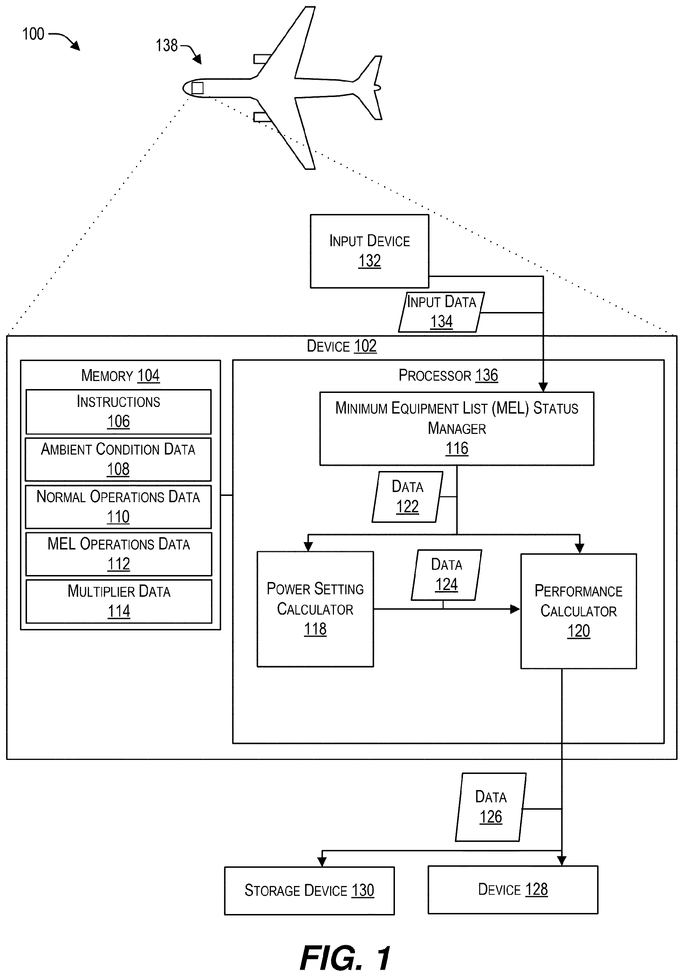

FIG. 1 is a diagram that illustrates a system 100 that includes an aircraft 138 that includes a device 102. The device 102 is configured to generate adjusted engine power settings and performance calculations (e.g., data 126) for the aircraft 138 operating with inoperative equipment items. The system 100 includes a memory 104 coupled to one or more processors, illustrated as a processor 136. The memory 104 includes instructions 106 and several categories of data, including ambient condition data 108, normal operations data 110, MEL operations data 112, and multiplier data 114.

The ambient condition data 108 includes baseline aircraft performance data such as engine thrust ratings, fuel flow characteristics, exhaust gas temperature limits, or a combination thereof. In some examples, the ambient condition data 108 further includes pressure altitude, temperature, airspeed, or barometric altitude, or a combination thereof. The ambient condition data 108 includes information used in performance calculations and represents characteristics of the aircraft 138 during normal operations.

The normal operations data 110 includes performance data for standard aircraft operations, including base power setting tables, thrust management parameters, environmental correction factors, or a combination thereof. The normal operations data 110 can be provided to a power setting calculator 118 of the processor 136 to establish base power settings before applying any adjustments needed due to inoperative equipment items.

The MEL operations data 112 includes reference data defining operational procedures, limitations, adjustments associated with equipment items that may become inoperative. The MEL operations data 112 includes information defining which equipment items may be inoperative, the associated operational restrictions, the performance adjustments required for each inoperative equipment item, or a combination thereof. The MEL operations data 112 may also include combined effects data for scenarios where multiple equipment items are inoperative simultaneously.

The multiplier data 114 includes adjustment factors used to modify engine power settings and performance calculations when the aircraft 138 is operating with inoperative equipment items. These adjustment factors correspond to an adjustment factor index from the multiplier data 114. Additionally, these adjustment factors are used to adjust base power settings based on the effects of inoperative equipment items on engine performance across different flight phases and environmental conditions.

The processor 136 includes a Minimum Equipment List (MEL) status manager 116, the power setting calculator 118, and a performance calculator 120. These components work together to implement a method for adjusting engine power settings and calculating performance impacts due to the aircraft 138 operating with inoperative equipment items.

The system 100 also includes an input device 132 configured to send input data 134 to the MEL status manager 116. For example, the input data 134 can identify one or more equipment items as inoperative. The input device 132 may include a Control Display Unit (CDU), one or more switches on an overhead panel of the aircraft, or both. The MEL status manager 116 processes the input data 134 and generates the data 122, indicating which equipment items are currently inoperative. When multiple equipment items are inoperative simultaneously, the MEL status manager 116 determines appropriate combined adjustment factors that account for the combined effects of the different inoperative equipment items. According to some examples, the MEL status manager 116 is configured to control operation of the power setting calculator 118 and the performance calculator 120 to generate resulting data 126, as explained further below.

The resulting data 126 is routed to a device 128, such as a display device for crew interface or an Electronic Engine Control (EEC) for direct thrust management. For example, the resulting data 126 can be routed to either display device functionality or engine control functionality of the device 128, depending on whether device 128 is implemented as the display device or as the EEC for direct thrust management.

The power setting calculator 118 receives the data 122 and is configured to calculate power setting adjustments. In some examples, the power setting calculator 118 first retrieves base power settings from the normal operations data 110, then uses the current status of any inoperative equipment items (e.g., data 122) to select appropriate adjustment factors from the multiplier data 114. The power setting calculator 118 applies these adjustment factors to the base power settings to generate adjusted power settings. In this and certain other examples, at least a portion of the calculations performed by the power setting calculator 118 incorporates the ambient condition data 108 including pressure altitude, temperature, airspeed, barometric altitude, or a combination thereof. The power setting calculator 118 generates data 124 containing the adjusted power settings and, optionally, related performance parameters.

In some examples, the power setting calculator 118 implements power setting adjustments that integrate with existing thrust management logic. When an equipment item becomes inoperative and the MEL status manager 116 receives corresponding input identifying this condition, the power setting calculator 118 determines adjustment factors for different flight phases. These adjustment factors enable enhanced engine performance as compared to the use of conventional factors that are not based on specific environmental conditions and that therefore impose more conservative margins. For example, when the MEL status manager 116 identifies an inoperative equipment item in a propulsion system, the power setting calculator 118 selects an adjustment factor corresponding to that particular inoperative equipment item. The power setting calculator 118 then integrates this adjustment factor into the thrust management calculation chain, modifying the base power setting in conjunction with environmental corrections to determine the final adjusted power setting.

The performance calculator 120 receives both the current status of inoperative equipment items (e.g., the data 122) and the adjusted power settings (e.g., the data 124) to determine performance impacts across different flight phases. The performance calculator 120 uses the ambient condition data 108 along with the adjusted power settings to calculate various performance metrics including weight penalties and fuel penalties. The performance calculator 120 generates the data 126 containing the final performance calculations.

The system 100 also includes a storage device 130 and a device 128. The storage device 130 receives and stores the data 126 for record-keeping purposes. The device 128 can be implemented, for example, as either a display device for presenting the adjusted performance parameters and associated operational limitations to the flight crew, or as an EEC for implementing the adjusted power settings. When implemented as a display device, the device 128 can be configured to receive input from the flight crew confirming the adjusted performance parameters. When implemented as an EEC, the device 128 can be configured to automatically implement the adjusted power settings without requiring flight crew confirmation.

During operation, when a flight crew identifies an inoperative equipment item during preflight inspection, they input this status via the input device 132, which may include the CDU interface or dedicated MEL switches (e.g., on an overhead panel). The MEL status manager 116 receives the resulting input data 134 and processes it to determine appropriate performance adjustments to be applied for the inoperative equipment item.

Using the multiplier data 114, the MEL status manager 116 selects adjustment factors based on the impact that the inoperative equipment item has on engine performance. During each flight phase, the MEL status manager 116 provides the selected adjustment factors to the power setting calculator 118, which applies these adjustment factors to determine appropriate power settings based on current flight conditions. For example, during takeoff, the power setting calculator 118 combines the adjustment factors with actual airport environmental conditions to determine appropriate thrust settings that maintain safe operation with the inoperative equipment item. The MEL status manager 116 generates data 122 indicative of the adjustment factor and sends the data 122 to the power setting calculator 118.

The power setting calculator 118 receives the data 122 and applies these adjustment factors to the base power settings obtained from normal operations data 110, while incorporating real-time ambient condition data 108, including pressure altitude, temperature, airspeed, barometric altitude, or a combination thereof. These parameters ensure accurate power setting adjustments across flight conditions. In some examples, the power setting calculator 118 combines the adjustment factors with current airport environmental conditions to determine an appropriate thrust reduction in light of the inoperative equipment and the real-time ambient condition data 108. The power setting calculator 118 generates the data 124 containing adjusted power settings that maintain engine operating margins while accounting for the inoperative equipment status.

The performance calculator 120 uses these adjusted power settings to compute operational impacts, including modified weight limitations, adjusted thrust levels, updated fuel flow predictions, and revised engine operating margins. For example, the performance calculator 120 determines weight penalties based on the reduced thrust availability and calculates increased fuel flow requirements due to reduced engine efficiency. The performance calculator 120 generates the data 126 containing the complete set of adjusted parameters and limitations. The data 126 can be sent to both the storage device 130 for flight data recording and the device 128 for either display to the flight crew or direct implementation through engine control.

In some examples, when the device 128 is implemented as an EEC, the system incorporates an automatic mode for implementing adjusted performance parameters. In this mode, once an equipment item is identified as inoperative and initial calculations are performed, the device 102 continuously updates the power settings based on actual flight conditions. These real-time adjustments are automatically transmitted to the device 128 for implementation during each flight phase, with modified performance parameters being sent to the flight management computer. In other examples, when the device 128 is implemented as a display device, the system incorporates a manual confirmation mode where the device 128 presents the adjusted parameters and requires flight crew acknowledgment before implementation. Upon confirmation, the parameters are sent for execution.

In distributed computing implementations, different components of the device 102 are implemented across multiple aircraft systems. The power setting calculations may be implemented within an EEC, while performance calculations are handled by a Flight Management Computer (FMC). This architecture ensures robust system redundancy while enabling real-time parameter adjustments throughout the flight phases.

By using the techniques and systems described herein, the device 102 provides technical advantages including automated, accurate, and consistent power setting adjustments when operating with inoperative equipment items. The system 100 uses real-time calculations based on actual flight conditions and offers significant improvements over existing manual adjustment methods by minimizing potential calculation errors and reducing operational complexity.

Furthermore, the device 102 provides enhanced operational efficiency through its integrated multi-system approach. The device's 102 ability to process multiple inoperative equipment items simultaneously, combined with its automatic implementation of adjustments across different flight phases, ensures appropriate performance calculations while reducing flight crew workload. This systematic approach eliminates the need for manual calculations and reduces the risk of incorrect performance adjustments.

The device 102 also offers the technical advantage of dynamic performance management through its continuous calculation capabilities. By implementing a comprehensive calculation methodology that accounts for varying flight conditions, the system 100 enables aircraft and airlines to maintain consistent performance optimization throughout the flight envelope. The ability to automatically adjust calculations based on both status of inoperative equipment items and the ambient condition data 108 further streamlines aircraft operations while ensuring appropriate performance limitations are maintained.

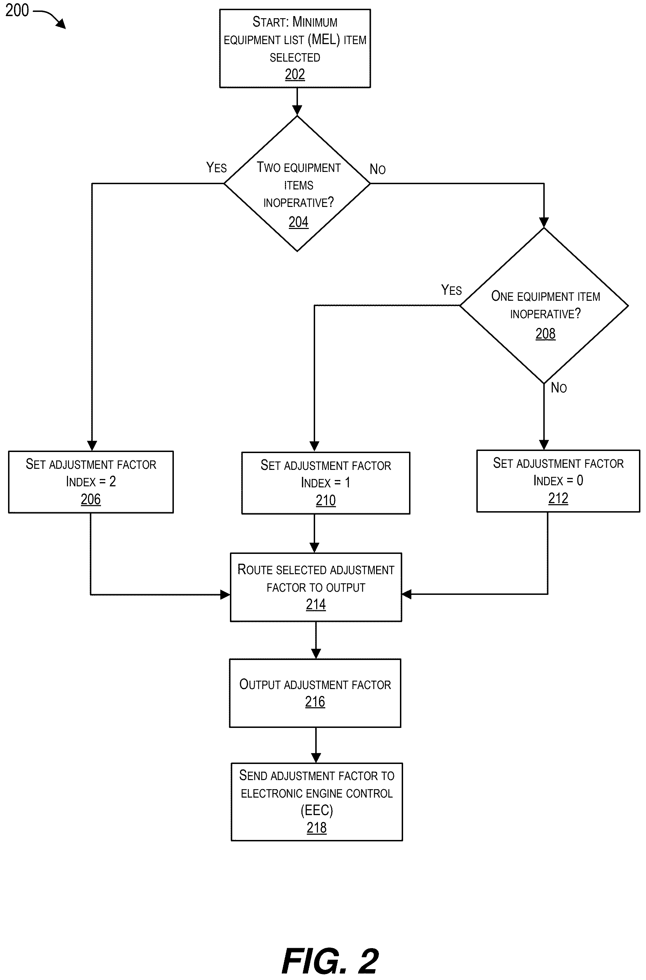

FIG. 2 is a flow diagram 200 illustrating an example of operations performed by the device 102 to implement automated engine power setting adjustments for Minimum Equipment List (MEL) dispatch operations. The device 102 executes these operations through various components described in FIG. 1, including the memory 104, the processor 136, the MEL status manager 116, the power setting calculator 118, and the performance calculator 120.

At block 202, the process begins when input data 134 identifying a first equipment item as being inoperative is received. The flight crew can input this selection through multiple interfaces including the input device 132, which may consist of either a Control Display Unit (CDU) or dedicated switches on the overhead panel of the aircraft 138. For example, if an equipment item affecting engine performance becomes inoperative, the crew can select this first equipment item through either interface.

At block 204, the MEL status manager 116 determines whether two equipment item are identified as inoperative based on the input data 134. This determination allows the device 102 to process scenarios where multiple equipment items may be inoperative simultaneously, and this status is recorded in data 122. For instance, the device 102 can process both an inoperative equipment item associated with a propulsion system and an inoperative equipment item associated with an environmental control system.

At block 206, if two equipment items are identified as inoperative, the power setting calculator 118 selects an adjustment factor that corresponds to an adjustment factor index = 2 from the multiplier data 114. This adjustment factor represents a combined adjustment factor that accounts for the effects of having multiple inoperative equipment items. The combined value specifically addresses the effects of having both equipment items inoperative rather than simply combining individual adjustment factors.

At block 208, if two or more equipment items are not determined to be inoperative then the MEL status manager 116 checks whether one equipment item is identified as inoperative. This check represents the basic case of processing a single inoperative equipment item.

At block 210, if one equipment item is identified as inoperative, the power setting calculator 118 selects an adjustment factor that corresponds to an adjustment factor index = 1 from the multiplier data 114. This selection represents the adjustment factor to be applied during engine performance calculations for the particular planned flight. For example, if a single equipment item in the propulsion system is inoperative, an adjustment factor value is selected based on the known impact of operating without this equipment item in the propulsion system.

At block 212, if no equipment items are identified as inoperative, the power setting calculator 118 selects an adjustment factor that corresponds to an adjustment factor index = 0 from the multiplier data 114. The selected adjustment factor represents normal operations with no adjustments required.

At block 214, the power setting calculator 118 routes the selected adjustment factor to output as data 124. This routing enables the device 102 to use the adjustment factor in calculating engine performance planning metrics based on both the selected value and the current ambient condition data 108 that includes pressure altitude, temperature, airspeed, barometric altitude, or a combination thereof.

At block 216, the performance calculator 120 outputs the adjustment factor value as part of data 126, along with adjusted engine power settings and performance calculations as described in FIG. 1. This output feeds into performance calculations that determine operational impacts. These impacts include modifications to operational weight limitations across various flight phases, including adjustments to the maximum allowable takeoff weight, modifications to the enroute climb weight limitations, and updates to the landing weight limitations. The device 102 can also calculate fuel-related impacts, determining both the baseline planned fuel requirements and any additional diversion fuel reserve requirements necessitated by the inoperative equipment item condition.

At block 218, the device 102 sends the adjustment factor corresponding to the particular inoperative equipment item(s) to the Electronic Engine Control (EEC). The adjustment factor is selected from the multiplier data 114 based on the impact of the particular inoperative equipment item(s) on engine performance. During flight operations, the EEC implements this adjustment by modifying the base power setting according to both the adjustment factor and environmental conditions. This implementation may ensure appropriate engine operation while accounting for any inoperative equipment items.

The flow diagram 200 implements a systematic approach to processing inoperative equipment items and calculating appropriate power setting adjustments. When the system receives additional ambient condition data 108, including pressure altitude, temperature, airspeed, barometric altitude, or a combination thereof, the system uses both the additional ambient condition data 108 and the adjustment factor from multiplier data 114 to determine the final set of engine performance planning metrics. The automated nature of these calculations and adjustments reduces operator burden while ensuring accurate performance impacts are applied across the flight phases.

The device 102 enables calculation and implementation of performance impacts as flight conditions change. For example, during the takeoff phase, the system can automatically account for airport altitude and temperature from the ambient condition data 108 while applying the appropriate adjustments for any inoperative equipment items based on data from the MEL operations data 112. During the climb phase, the system continues to adjust performance calculations based on changing atmospheric conditions while maintaining the required limitations. The resulting data 126 can be stored in storage device 130 and processed by device 128, which either provides flight crew interface when implemented as a display device or directly implements thrust adjustments when implemented as an Electronic Engine Control.

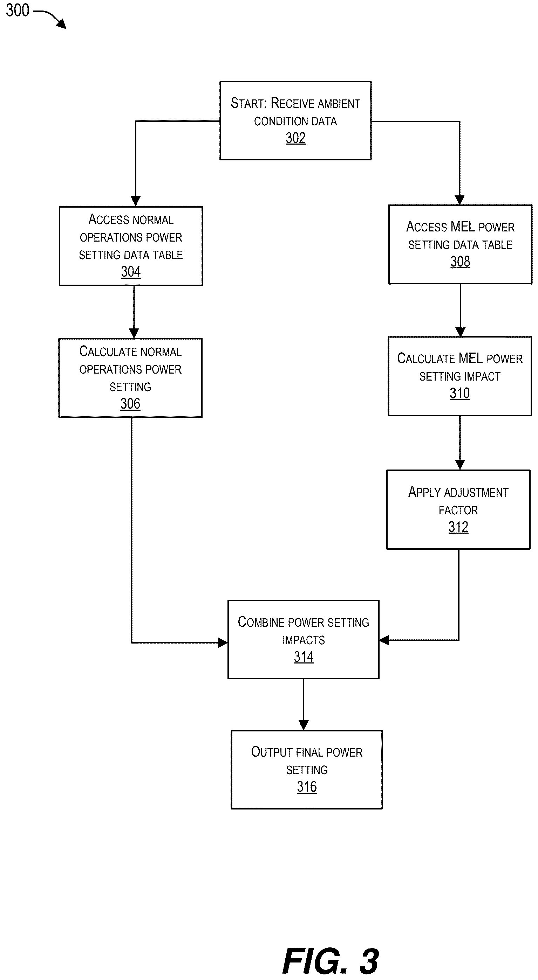

FIG. 3 is a flow diagram 300 illustrating an example of operations performed by the device 102 to calculate and combine power setting impacts for both normal operations and operations with inoperative equipment items. The device 102 executes these operations through various components described in FIG. 1, including the memory 104, the processor 136, the MEL status manager 116, the power setting calculator 118, and the performance calculator 120.

At block 302, the device 102 receives the ambient condition data 108. The ambient condition data 108 includes ambient condition information such as pressure altitude, temperature, airspeed, barometric altitude, or a combination thereof, as well as current aircraft configuration parameters that affect engine performance calculations.

At block 304, the device 102 accesses the normal operations power setting data table stored in the normal operations data 110. This table includes baseline engine performance data representing standard aircraft operations without any inoperative equipment items. The normal operations data 110 includes base power setting tables, thrust management parameters, and environmental correction factors.

At block 306, the power setting calculator 118 calculates the normal operations power setting. This calculation incorporates the received ambient condition data 108 with the baseline performance parameters to determine the standard thrust setting that would be appropriate for the current flight conditions during normal operations.

At block 308, in parallel with the normal operations calculations, the device 102 accesses the MEL power setting data table from the MEL operations data 112. This table includes adjustment factors and performance data associated with equipment items that may be inoperative. The MEL operations data 112 provides the information needed to modify engine performance calculations when equipment items are identified as inoperative.

At block 310, the power setting calculator 118 calculates the power setting impact based on any inoperative equipment items. Using the data from the MEL operations data 112 and multiplier data 114, the power setting calculator 118 determines the performance adjustments needed. For example, if an equipment item in the propulsion system is inoperative, the power setting calculator 118 calculates the appropriate thrust reduction based on the impact of operating without that equipment item.

At block 312, the power setting calculator 118 applies the adjustment factor from the multiplier data 114. This adjustment factor represents the adjustment to account for the effects of the inoperative equipment item. The adjustment factor may reflect the impact of a single inoperative equipment item or the combined effects of multiple inoperative equipment items, as indicated by data 122 from the MEL status manager 116.

At block 314, the performance calculator 120 combines the power setting impacts from both calculation paths. This combination integrates the baseline normal operations power setting with the adjustments for any inoperative equipment items to generate data 124.

At block 316, the performance calculator 120 outputs the final power setting as data 126. The performance calculator 120 sends data 126 to the storage device 130 and the device 128. The final setting represents the adjusted engine power setting that will be implemented by the Electronic Engine Control (EEC). The final setting maintains appropriate operating margins while accounting for both environmental conditions and inoperative equipment items.

The flow diagram 300 implements a dual-path calculation approach that ensures accurate power settings for operation with inoperative equipment items. The parallel processing of normal operations data 110 and MEL operations data 112 allows the device 102 to maintain awareness of baseline performance capabilities while applying necessary adjustments. This automated calculation process removes the need for manual adjustments and reduces the possibility of human error in determining appropriate power settings.

The device 102 enables precise control of engine performance across all flight phases through the coordinated operation of the MEL status manager 116, power setting calculator 118, and performance calculator 120. For example, during takeoff, the device 102 automatically integrates airport environmental conditions from the ambient condition data 108 with adjustments needed for any inoperative equipment items as defined in MEL operations data 112 to calculate appropriate thrust settings. During climb and cruise phases, the device 102 continues to update these calculations to maintain performance while respecting both environmental and operational limitations. These updates are processed through device 128, which either displays the updated parameters to the flight crew or implements thrust adjustments directly, depending on its implementation as either a display device or Electronic Engine Control.

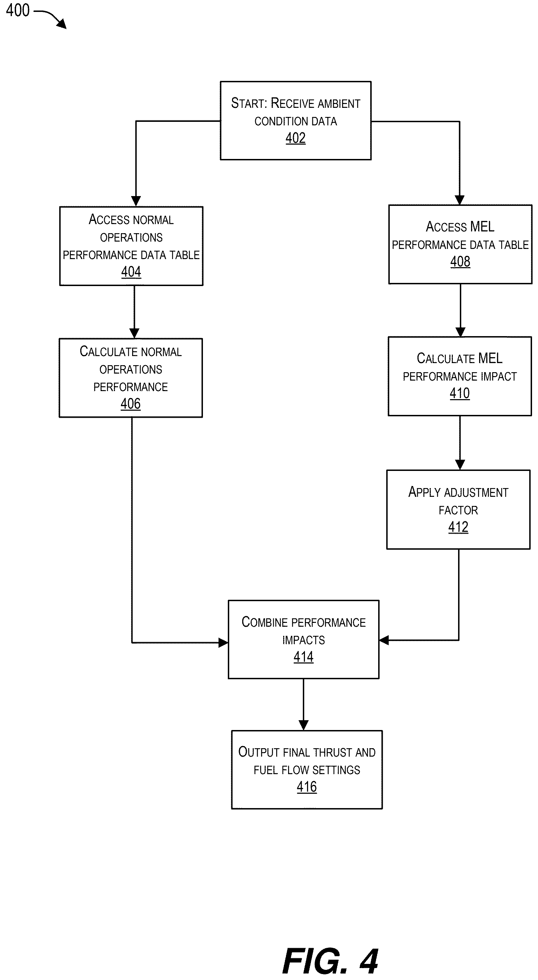

FIG. 4 is a flow diagram 400 illustrating an example of operations performed by the device 102 to calculate and combine performance impacts for both normal operations and Minimum Equipment List (MEL) dispatch conditions. The device 102 executes these operations through various components described in FIG. 1, including the memory 104, the processor 136, the MEL status manager 116, the power setting calculator 118, and the performance calculator 120.

At block 402, the power setting calculator 118 receives the ambient condition data 108. The ambient condition data 108 includes information such as pressure altitude, temperature, airspeed, barometric altitude, or a combination thereof, as well as current aircraft configuration parameters that affect engine performance calculations.

At block 404, the power setting calculator 118 accesses the normal operations performance data table stored in the normal operations data 110. This table includes baseline engine thrust and fuel flow data representing standard aircraft operations when all equipment items are operative. The normal operations data 110 includes base performance tables, thrust management parameters, and environmental correction factors.

At block 406, the power setting calculator 118 calculates the normal operations performance. This calculation incorporates the received ambient condition data 108 with the baseline performance parameters to determine the standard thrust and fuel flow settings that would be appropriate for the current flight conditions during normal operations.

At block 408, in parallel with the normal operations calculations, the power setting calculator 118 accesses the MEL performance data table from the MEL operations data 112. This table includes adjustment factors and performance data associated with equipment items that may be inoperative. When equipment items are identified as inoperative, the multiplier data 114 provides the information to modify performance calculations.

At block 410, the power setting calculator 118 calculates the performance impact of any inoperative equipment items. Using the data from the MEL operations data 112 and multiplier data 114, the power setting calculator 118 determines the performance adjustments based on the status indicated by the data 122 from the MEL status manager 116.

At block 412, the power setting calculator 118 applies the adjustment factor from the multiplier data 114. This adjustment factor represents the appropriate adjustment to account for the effects of operating with inoperative equipment items. The adjustment factor may reflect the impact of a single inoperative equipment item or the combined effects of multiple inoperative equipment items, as indicated by the data 122 from the MEL status manager 116.

At block 414, the performance calculator 120 combines the performance impacts from both calculation paths. This combination integrates the baseline normal operations performance with the adjustments for any inoperative equipment items to create comprehensive thrust and fuel flow settings that account for both current flight conditions and equipment status to generate data 124.

At block 416, the performance calculator 120 outputs the final thrust and fuel flow settings as data 126. The performance calculator 120 sends the data 126 to the storage device 130 and the device 128. The final thrust and fuel flow settings represent the adjusted engine performance parameters that can be implemented by the Electronic Engine Control (EEC). The settings account for both environmental conditions and MEL restrictions.

The flow diagram 400 implements a dual-path calculation approach for determining thrust and fuel flow settings during operations with inoperative equipment items. As shown in FIG. 4, when the MEL status manager 116 identifies an inoperative equipment item, the power setting calculator 118 and performance calculator 120 process the adjustment through parallel paths. The first path processes normal operations data 110 through the power setting calculator 118, while the second path processes MEL operations data 112 to determine appropriate adjustments. During thrust calculations, the power setting calculator 118 incorporates the adjustment factor after environmental corrections but before final thrust setting limits are calculated, and this adjusted thrust setting is transmitted to the Electronic Engine Control (EEC).

The performance calculator 120 coordinates these adjustments with other thrust management functions to maintain engine operating limitations. The coordinated operation of the MEL status manager 116, power setting calculator 118, and performance calculator 120 enables continuous thrust and fuel flow calculations across all flight phases. During takeoff, these components integrate airport environmental conditions from the ambient condition data 108 with adjustments for any inoperative equipment items from the MEL operations data 112. As the aircraft 138 climbs and cruises, the performance calculator 120 updates these calculations based on changing atmospheric conditions while maintaining operations limitations.

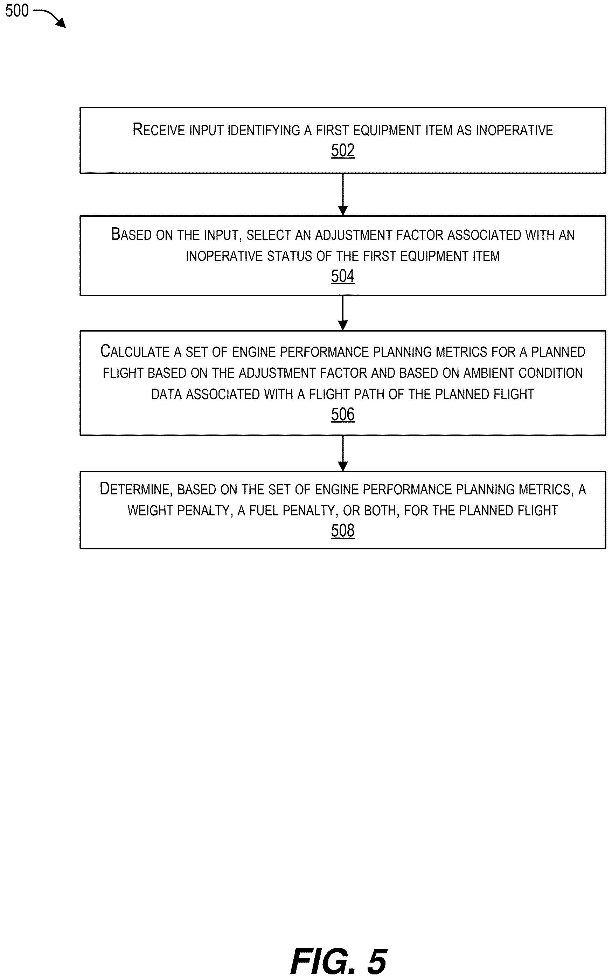

FIG. 5 illustrates a method 500 of generating adjusted engine power settings and performance calculations for aircraft 138 operating with inoperative equipment items. The method 500 includes, at block 502, receiving input (e.g., input data 134) identifying a first equipment item as inoperative. For example, the MEL status manager 116 receives input through the input device 132, such as a selection on the Control Display Unit (CDU) or activation of a switch on the overhead panel, indicating that an equipment item is inoperative.

The method 500 includes, at block 504, based on the input, selecting an adjustment factor associated with an inoperative status of the first equipment item. For example, the power setting calculator 118 accesses the multiplier data 114 to select an adjustment factor corresponding to the identified inoperative equipment item. When multiple equipment items are inoperative, the power setting calculator 118 selects a combined adjustment factor that accounts for the interaction effects between the inoperative equipment items.

The method 500 includes, at block 506, calculating a set of engine performance planning metrics for a planned flight based on the adjustment factor and based on ambient condition data associated with a flight path of the planned flight. For example, the performance calculator 120 processes the ambient condition data 108, including temperature, pressure altitude, airspeed, barometric altitude, or a combination thereof, along with the selected adjustment factor to determine adjusted thrust settings and fuel flow rates across different flight phases. The performance calculator 120 generates the data 124 containing these adjusted performance parameters.

The method 500 includes, at block 508, determining, based on the set of engine performance planning metrics, a weight penalty, a fuel penalty, or both, for the planned flight. For example, the performance calculator 120 analyzes the data 124 to calculate operational limitations including: reduced takeoff weight limits to maintain required climb gradients with inoperative equipment items, increased fuel reserves accounting for reduced engine efficiency, and modified landing weight restrictions. The performance calculator 120 generates the data 126 containing these penalties and sends them to the storage device 130 and the device 128 for flight crew reference.

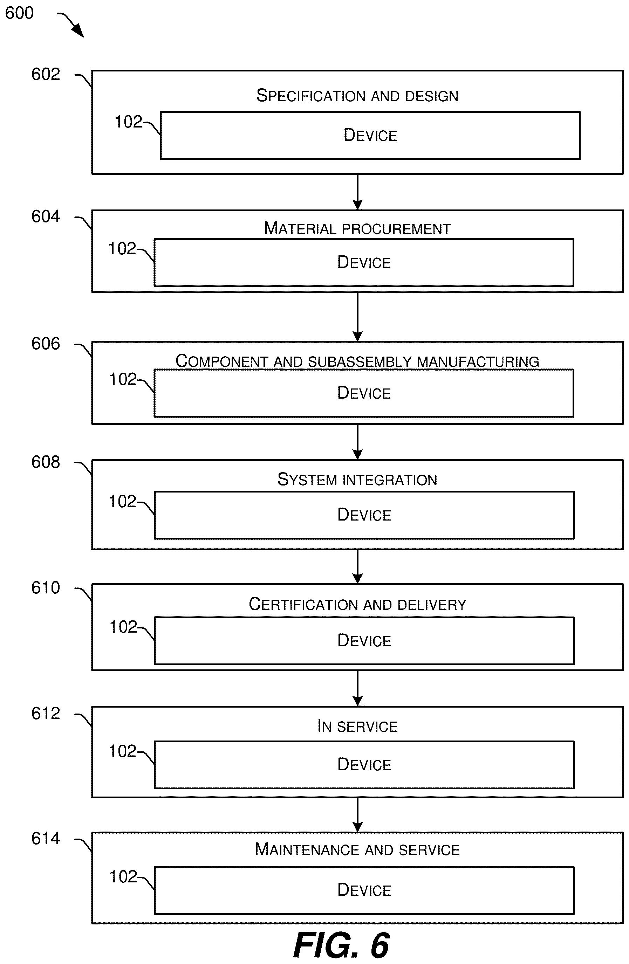

FIG. 6 is a flowchart illustrating an example 600 of a life cycle of an aircraft that includes the device 102 of FIG. 1. During pre-production, the exemplary method 600 includes, at block 602, specification and design of the aircraft. During specification and design of the aircraft, the method 600 may include specification and design of the device 102 and locations where the device 102 are to be placed. At block 604, the method 600 includes material procurement, which may include procuring materials for the device 102 or procuring pre-assembled device 102.

During production, the method 600 includes, at block 606, component and subassembly manufacturing and, at block 608, system integration of the aircraft. For example, the method 600 may include component and subassembly manufacturing of the device 102, system integration of the device 102 with the aircraft, or both. At block 610, the method 600 includes certification and delivery of the aircraft and, at block 612, placing the aircraft in service. Certification and delivery may include certification of the device 102 to place the device 102 in service. While in service by a customer, the aircraft may be scheduled for routine maintenance and service (which may also include modification, reconfiguration, refurbishment, and so on). At block 614, the method 600 includes performing maintenance and service on the aircraft, which may include performing maintenance and service on the device 102. For example, the maintenance and service can include replacing one or more computer components included in the device 102.

Each of the processes of the method 600 may be performed or carried out by a system integrator, a third party, and/or an operator (e.g., a customer). For the purposes of this description, a system integrator may include without limitation any number of aircraft manufacturers and majorsystem subcontractors; a third party may include without limitation any number of venders, subcontractors, and suppliers; and an operator may be an airline, leasing company, military entity, service organization, and so on.

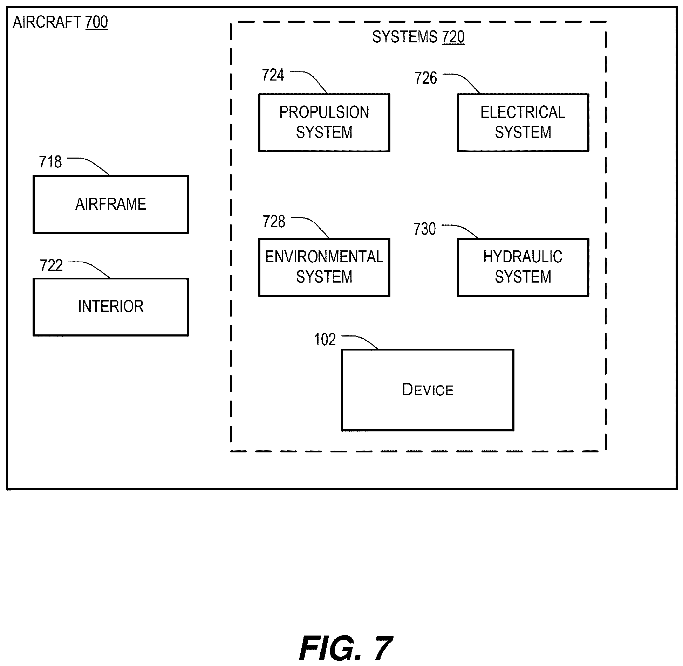

Examples of the disclosure can be described in the context of an aircraft 700 as shown in FIG. 7. In the example of FIG. 7, the aircraft 700 includes an airframe 718 with a plurality of systems 720 and an interior 722 Examples of the plurality of systems 720 include one or more of a propulsion system 724, an electrical system 726, an environmental system 728, a hydraulic system 730, and the device 102. Any number of other systems may be included. The aircraft 700 of FIG. 7 may include the device 102 in accordance with one or more examples of the disclosure as described in FIGS. 1-6. Portions of the device 102 are included in the airframe 718 and the interior 722.

FIG. 8 is a block diagram of a computing environment 800 including a computing device 810 configured to support examples of computer-implemented methods and computer-executable program instructions (or code) according to the present disclosure. For example, the computing device 810, or portions thereof, is configured to execute instructions to initiate, perform, or control one or more operations described with reference to FIGS. 1-7.

The computing device 810 includes one or more processors 820. In some examples, the processor(s) 820 includes the processor(s) 136, as described in FIG. 1. The processor(s) 820 are configured to communicate with system memory 830, one or more storage devices 840, one or more input/output interfaces 850, one or more communications interfaces 860, or any combination thereof. The system memory 830 includes volatile memory devices (e.g., random access memory (RAM) devices), nonvolatile memory devices (e.g., read-only memory (ROM) devices, programmable read-only memory, and flash memory), or both. The system memory 830 stores an operating system 832, which may include a basic input/output system for booting the computing device 810 as well as a full operating system to enable the computing device 810 to interact with users, other programs, and other devices. The system memory 830 stores system (program) data 836 and applications 834, such as the MEL status manager 116, the power setting calculator 118, the performance calculator 120, or a combination thereof.

The system memory 830 includes one or more operating systems 832 and/or one or more applications 834 (e.g., sets of instructions) executable by the processor(s) 820. As an example, the one or more applications 834 include instructions executable by the processor(s) 820 to initiate, control, or perform one or more operations described with reference to FIGS. 1-7, such as receiving input identifying a first equipment item as inoperative, based on the input, selecting an adjustment factor associated with an inoperative status of the first equipment item, calculating a set of engine performance planning metrics for a planned flight based on the adjustment factor and based on ambient condition data 108 associated with a flight path of the planned flight, and determining, based on the set of engine performance planning metrics, a weight penalty, a fuel penalty, or both, for the planned flight.

In some examples, the system memory 830 includes a non-transitory, computer-readable medium storing the instructions that, when executed by the processor(s) 820, cause the processor(s) 820 to initiate, perform, or control operations to aid in generating adjusted engine power settings and performance calculations for aircraft 138 operating with inoperative equipment items. The operations include receiving input identifying a first equipment item as inoperative, based on the input, selecting an adjustment factor associated with an inoperative status of the first equipment item, calculating a set of engine performance planning metrics for a planned flight based on the adjustment factor and based on ambient condition data 108 associated with a flight path of the planned flight, and determining, based on the set of engine performance planning metrics, a weight penalty, a fuel penalty, or both, for the planned flight.

The one or more storage devices 840 include nonvolatile storage devices, such as magnetic disks, optical disks, or flash memory devices. In some examples, the storage devices 840 include both removable and non-removable memory devices. The storage devices 840 are configured to store an operating system, images of operating systems, applications (e.g., one or more of the applications 834), and program data (e.g., the program data 836). In some examples, the system memory 830, the storage devices 840, or both, include tangible computer-readable media. In some examples, one or more of the storage devices 840 are external to the computing device 810.

The one or more input/output interfaces 850 enable the computing device 810 to communicate with one or more input/output devices 870 to facilitate user interaction. For example, the one or more input/output interfaces 850, an input interface, or both. For example, the input/output interface 850 is adapted to receive input from a user, to receive input from another computing device, or a combination thereof. In some examples, the input/output interface 850 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some examples, the input/output device 870 includes one or more user interface devices and displays, including some combination of buttons, keyboards, pointing devices, displays, speakers, microphones, touch screens, and other devices.

The processor(s) 820 are configured to communicate with devices or controllers 880 via the one or more communications interfaces 860. For example, the one or more communications interfaces 860 can include a network interface.

In some examples, a non-transitory, computer-readable medium stores instructions that, when executed by one or more processors, cause the one or more processors to initiate, perform, or control operations to perform part or all of the functionality described above. For example, the instructions may be executable to implement one or more of the operations or methods of FIGS. 1-7. In some examples, part, or all of one or more of the operations or methods of FIGS. 1-7 may be implemented by one or more processors (e.g., one or more central processing units (CPUs), one or more graphics processing units (GPUs), one or more digital signal processors (DSPs)) executing instructions, by dedicated hardware circuitry, or any combination thereof.

Particular features of the disclosure are described below in sets of interrelated Examples:
According to Example 1, an aircraft includes one or more processors configured to receive input identifying a first equipment item as inoperative; select, based on the input identifying the first equipment item as inoperative, an adjustment factor to be applied during engine performance calculations for a particular planned flight of the aircraft; determine, based on the adjustment factor and ambient condition data associated with the aircraft, a set of engine performance planning metrics for the particular planned flight; and determine, based on the set of engine performance planning metrics, a weight penalty, a fuel penalty, or both, for the particular planned flight.

Example 2 includes the aircraft of Example 1, further comprising a Control Display Unit (CDU), wherein the one or more processors are configured to receive the input via the CDU.

Example 3 includes the aircraft of Example 1 or Example 2, further comprising one or more switches on a panel of the aircraft, wherein the one or more processors are configured to receive the input via the one or more switches.

Example 4 includes the aircraft of any of Examples 1 to 3, wherein, to determine the set of engine performance planning metrics, the one or more processors are configured to calculate a base power setting; apply the adjustment factor to the base power setting to generate an adjusted power setting; and determine the set of engine performance planning metrics based on the adjusted power setting.

Example 5 includes the aircraft of Example 4, wherein the one or more processors are configured to transmit the adjusted power setting to an Electronic Engine Control (EEC) for implementation during the particular planned flight.

Example 6 includes the aircraft of any of Examples 1 to 5, wherein to determine the set of engine performance planning metrics, the one or more processors are configured to receive the ambient condition data comprising at least one of pressure altitude, temperature, airspeed, or barometric altitude; and determine the set of engine performance planning metrics based on both the adjustment factor and the ambient condition data.

Example 7 includes the aircraft of any of Examples 1 to 6, wherein the weight penalty comprises at least one of: a takeoff weight limitation; an enroute climb weight limitation; or a landing weight limitation.

Example 8 includes the aircraft of any of Examples 1 to 7, wherein the fuel penalty comprises at least one of: a planned fuel requirement; or a diversion fuel reserve requirement.

Example 9 includes the aircraft of any of Examples 1 to 8, wherein the one or more processors are configured to receive input identifying a second equipment item as inoperative; select, based on both the first equipment item and the second equipment item being inoperative, a combined adjustment factor that accounts for combined effects of both inoperative items; and determine the set of engine performance planning metrics based on the combined adjustment factor.

According to Example 10, an aircraft includes one or more processors configured to receive input identifying a first equipment item as inoperative; based on the input, select an adjustment factor associated with an inoperative status of the first equipment item; calculate a set of engine performance planning metrics for a planned flight based on the adjustment factor and based on ambient condition data associated with a flight path of the planned flight; and determine, based on the set of engine performance planning metrics, a weight penalty, a fuel penalty, or both, for the planned flight.

Example 11 includes the aircraft of Example 10 and further includes a Control Display Unit (CDU), wherein the one or more processors are configured to receive the input via the CDU.

Example 12 includes the aircraft of Example 10 or Example 11, further comprising one or more switches on a panel of the aircraft, wherein the one or more processors are configured to receive the input via the one or more switches.

Example 13 includes the aircraft of any of Examples 10 to 12, wherein, to determine the set of engine performance planning metrics, the one or more processors are configured to calculate a base power setting; apply a adjustment factor to the base power setting to generate an adjusted power setting; and determine the set of engine performance planning metrics based on the adjusted power setting.

Example 14 includes the aircraft of Example 13, wherein the one or more processors are further configured to transmit the adjusted power setting to an Electronic Engine Control (EEC); and cause the EEC to implement the adjusted power setting during the planned flight.

Example 15 includes the aircraft of any of Examples 10 to 14, wherein to determine the set of engine performance planning metrics, the one or more processors are configured to receive the ambient condition data comprising at least one of pressure altitude, temperature, airspeed, or barometric altitude; and determine the set of engine performance planning metrics based on both an adjustment factor and the ambient condition data.

Example 16 includes the aircraft of any of Examples 10 to 15, wherein the weight penalty comprises at least one of: a takeoff weight limitation; an enroute climb weight limitation; or a landing weight limitation.

Example 17 includes the aircraft of any of Examples 10 to 16, wherein the fuel penalty comprises at least one of: a planned fuel requirement; or a diversion fuel reserve requirement.

Example 18 includes the aircraft of any of Examples 10 to 17, wherein the one or more processors are configured to receive input identifying a second equipment item as inoperative; select, based on both the first equipment item and the second equipment item being inoperative, a combined adjustment factor associated with the inoperative status of the first equipment item in conjunction with an inoperative status of the second equipment item; and calculate the set of engine performance planning metrics based on the combined adjustment factor.

According to Example 19, a method includes receiving input identifying a first equipment item as inoperative; based on the input, selecting an adjustment factor associated with an inoperative status of the first equipment item; calculating a set of engine performance planning metrics for a planned flight based on the adjustment factor and based on ambient condition data associated with a flight path of the planned flight; and determining, based on the set of engine performance planning metrics, a weight penalty, a fuel penalty, or both, for the planned flight.

Example 20 includes the method of Example 19, further includes receiving input identifying a second equipment item as inoperative; selecting, based on both the first equipment item and the second equipment item being inoperative, a combined adjustment factor associated with the inoperative status of the first equipment item in conjunction with an inoperative status of the second equipment item; and calculating the set of engine performance planning metrics based on the combined adjustment factor.

The illustrations of the examples described herein are intended to provide a general understanding of the structure of the various examples. The illustrations are not intended to serve as a complete description of all of the elements and features of apparatus and systems that utilize the structures or methods described herein. Many other examples may be apparent to those of skill in the art upon reviewing the disclosure. Other examples may be utilized and derived from the disclosure, such that structural and logical substitutions and changes may be made without departing from the scope of the claims. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific examples shown. This disclosure is intended to cover any and all subsequent adaptations or variations of various examples. Combinations of the above examples, and other examples not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single example for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims.

## Claims

1. An aircraft (138) comprising:
one or more processors (136, 820) configured to:
receive (502) input (134) identifying a first equipment item as inoperative;
select (116, 206), based on the input identifying the first equipment item as inoperative, an adjustment factor to be applied during engine performance calculations for a particular planned flight of the aircraft;
determine (118, 214), based on the adjustment factor and ambient condition data associated with the aircraft, a set of engine performance planning metrics for the particular planned flight; and
determine (120, 508), based on the set of engine performance planning metrics (126), a weight penalty and/or a fuel penalty for the particular planned flight.

2. The aircraft of claim 1, further comprising a control display unit (CDU) (132), wherein the one or more processors are configured to receive the input via the control display unit.

3. The aircraft of claim 1 or 2, further comprising one or more switches on a panel (132) of the aircraft, wherein the one or more processors are configured to receive the input via the one or more switches.

4. The aircraft of any preceding claim, wherein, to determine the set of engine performance planning metrics, the one or more processors are configured to:
calculate (118, 306) a base power setting;
apply (118, 312) the adjustment factor to the base power setting to generate an adjusted power setting (126); and
determine (118, 314) the set of engine performance planning metrics based on the adjusted power setting.

5. The aircraft of claim 4, wherein the one or more processors are configured to transmit (218) the adjusted power setting to an electronic engine control (EEC) (128) for implementation during the particular planned flight.

6. The aircraft of claim 5, wherein the one or more processors are configured to cause the electronic engine control to implement the adjusted power setting during the particular planned flight.

7. The aircraft of any preceding claim, wherein to determine the set of engine performance planning metrics, the one or more processors are configured to:
receive (402) the ambient condition data comprising at least one of pressure altitude, temperature, airspeed, or barometric altitude; and
determine (410) the set of engine performance planning metrics based on both the adjustment factor and the ambient condition data.

8. The aircraft of any preceding claim, wherein:
the weight penalty comprises at least one of a takeoff weight limitation, an enroute climb weight limitation, or a landing weight limitation; and/or
the fuel penalty comprises a planned fuel requirement and/or a diversion fuel reserve requirement.

9. The aircraft of any preceding claim, wherein the one or more processors are further configured to:
receive (502) input (134) identifying a second equipment item as inoperative;
select (116, 206), based on both the first equipment item and the second equipment item being inoperative, a combined adjustment factor that accounts for combined effects of both inoperative items; and
determine (118, 214) the set of engine performance planning metrics based on the combined adjustment factor.

10. A method (500) comprising:
receiving (502) input identifying a first equipment item as inoperative;
based on the input, selecting (504) an adjustment factor associated with an inoperative status of the first equipment item;
calculating (506) a set of engine performance planning metrics for a planned flight based on the adjustment factor and based on ambient condition data associated with a flight path of the planned flight; and
determining (508), based on the set of engine performance planning metrics (126), a weight penalty, a fuel penalty, or both, for the planned flight.

11. The method of claim 10, comprising calculating the set of engine performance planning metrics by:
calculating (118, 306) a base power setting;
applying (118, 312) the adjustment factor to the base power setting to generate an adjusted power setting (126); and
determining (118, 314) the set of engine performance planning metrics based on the adjusted power setting.

12. The method of claim 11, comprising transmitting (218) the adjusted power setting to an electronic engine control (EEC) (128) for implementation during the particular planned flight.

13. The method of claim 12, comprising causing the electronic engine control to implement the adjusted power setting during the planned flight.

14. The method of any of claims 10 to 13, further comprising:
receiving input identifying a second equipment item as inoperative;
selecting, based on both the first equipment item and the second equipment item being inoperative, a combined adjustment factor associated with the inoperative status of the first equipment item in conjunction with an inoperative status of the second equipment item; and
calculating the set of engine performance planning metrics based on the combined adjustment factor.

15. A computer program comprising computer program instructions that, when executed by one more processors, cause the one or more processors to perform the method of any of claims 10 to 14, or a computer readable medium having stored thereon such a computer program.
